# EUROPÄISCHE PATENTSCHRIFT

(11) **EP 1 317 512 B1**
(45) Veröffentlichungstag und Bekanntmachung des Hinweises auf die Patenterteilung: **02.06.2004**
(21) Anmeldenummer: 01982284.0
(22) Anmeldetag: 13.09.2001
(51) Int. Cl.: C09B 35/033, C09B 35/215, C09B 44/06

(54) **BISAZOFARBSTOFFE AUF DER BASIS VON HYDROXYNAPHTHALINCARBONSÄURE**
BISAZO DYESTUFFS BASED ON HYDROXYNAPHTHALENE CARBOXYLIC ACID
COLORANTS BISAZOIQUES A BASE D'ACIDE HYDROXY-NAPHTALENE-CARBOXYLIQUE

(30) Priorität: 14.09.2000 DE 10045430
(43) Veröffentlichungstag der Anmeldung: 11.06.2003
(73) Patentinhaber: BASF AKTIENGESELLSCHAFT, 67056 Ludwigshafen (DE)
(72) Erfinder: SCHRÖDER, Gunter-Rudolf, 68259 Mannheim (DE); EBERT, Sophia, 55118 Mainz (DE); ETZBACH, Karl-Heinz, 67227 Frankenthal (DE); TRESCH, Rainer, 67133 Maxdorf (DE); SENS, Rüdiger, 67069 Ludwigshafen (DE)
(74) Vertreter: Kinzebach, Werner, Dr.
(86) Internationale Anmeldenummer: PCT/EP2001/010597
(87) Internationale Veröffentlichungsnummer: WO 2002/022742

(56) Entgegenhaltungen:
- DE-A- 2 061 964
- DE-A- 2 246 495

## Beschreibung

Die Erfindung betrifft Bisazofarbstoffe auf der Basis von Hydroxynaphthalincarbonsäure, Färbemittel, die diese Bisazofarbstoffe enthalten und die Verwendung der Bisazofarbstoffe zum Färben von natürlichen und synthetischen Materialien.

Bisazofarbstoffe sind eine technisch bedeutende Farbstoffklasse und es sind zahlreiche Farbstoffe dieses Typs entwickelt worden.

DE 198 15 945 A 1 offenbart kationische Sulfonsäurefarbstoffe, bei denen eine Hydroxy-Aminonaphthalin-Sulfonsäure an zwei Phenylreste, die jeweils einen Substituenten mit quartärem Stickstoffatom tragen, azogekuppelt ist.

DE 1 768 892 A beschreibt Bisazofarbstoffe, bei denen zwei über Amidbindungen verknüpfte Hydroxynaphthalincarbonsäure-Reste jeweils an doppelt substituierte Phenylgruppen azogekuppelt sind.

DE 2 246 495 A offenbart Bisazofarbstoffe auf der Basis von Hydroxynaphthalincarbonsäureamiden. Zwei Hydroxynaphthalincarbonsäureamidgruppen sind über Azobrücken mit einem Aromaten verbunden, beispielsweise einer substituierten oder unsubstituierten Verbindung des Typs, 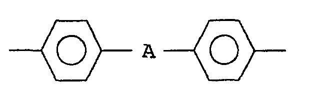 in der
- A: Amido, Thioharnstoff, Alkylendiamid, Phenylendiamid, Disulfid, Azo, Imino, Carbonyl oder Sulfonyl bedeutet.

US-A-4,046,502, DE 2 061 964 A und CH 554 399 offenbaren nichtionische, monokationische und dikationische Bisazofarbstoffe auf der Basis von Hydroxynaphthalincarbonsäureamiden. Dabei sind Hydroxynaphthalincarbonsäureamidreste über Azobrücken mit einer Verbindung des Typs 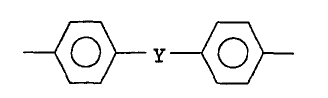 verbunden, wobei Y für eine direkte Bindung, gegebenenfalls substituiertes Alkylen, -S-, -O-, -NH-CO-NH- oder -CH=CH- steht.

Die bekannten Farbstoffe sind hinsichtlich Lichtechtheit und Brillanz nicht zufriedenstellend. Es besteht daher die Aufgabe weitere, verbesserte Farbstoffe zur Verfügung zu stellen, die gleichzeitig gute Lichtechtheit und Brillanz aufweisen.

Überraschenderweise wurde nun gefunden, dass die Verbindungen de unten angegebenen Formeln Ia und Ib diese Aufgabe lösen.

Gegenstand der vorliegenden Erfindung sind somit Bisazoverbindun gen der Formel Ia 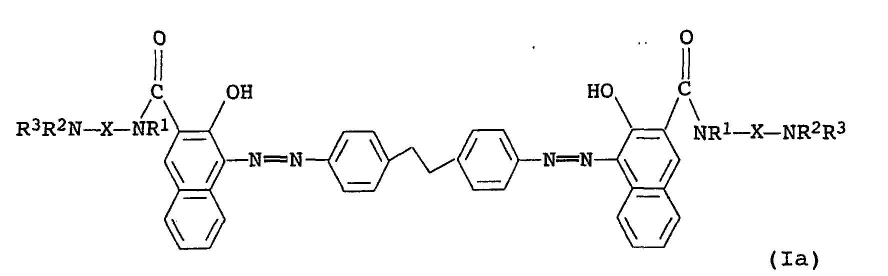 oder der Formel Ib, 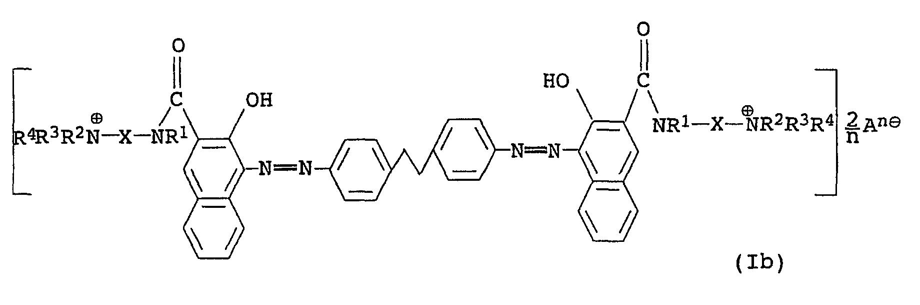 worin
- R¹: Wasserstoff oder Methyl ist,
die Gruppen X unabhängig voneinander für -CH₂CH₂- oder -CH₂CH₂CH₂stehen,
- R²,: R³, R⁴ unabhängig voneinander für Wasserstoff oder Methyl stehen,
- A: ein Anion ist, und
- n: der Wertigkeit von A entspricht.

Gegenstand der vorliegenden Erfindung sind außerdem Färbemittel, die mindestens eine Verbindung der Formel I und gegebenenfalls andere kationische, nichtionische oder anionische Farbstoffe und/oder Hilfsstoffe und/oder Träger enthalten.

Gegenstand der vorliegenden Erfindung ist außerdem die Verwendung der Verbindungen der Formel I zum Färben, Foulardieren oder Bedrucken von natürlichem oder synthetischem polymeren Material, Papierstoffen, Leder, natürlichen und synthetischen Fasermaterialien.

Die erfindungsgemäßen Bisazoverbindungen sind Derivate der 2-Hydroxynaphthalin-3-carbonsäure (Bon-Säure).

Bei den erfindungsgemäßen Bisazoverbindungen können die Gruppen X gleich oder verschieden sein, bevorzugt sind sie gleich.

Auch die Gruppen NR²R³ bzw. NR²R³R⁴ können gleich oder verschieden sein, wobei sie bevorzugt gleich sind. Besonders bevorzugt sind völlig symmetrisch aufgebaute Bisazoverbindungen.

NR²R³ steht insbesondere für

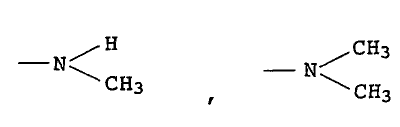

NR²R³R⁴ steht insbesondere für

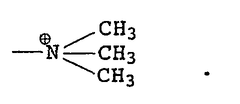

Bei den kationischen Bisazoverbindungen der Formel Ib sind zum Ladungsausgleich Anionen A⊖ erforderlich. Geeignet sind anorganische und organische Anionen, z. B. Fluorid, Chlorid, Bromid, Iodid, Sulfat, Methylsulfat, Phosphat, Anionen von Carbonsäuren oder Sulfonsäuren, wie Formiat, Acetat, Propionat, Mono-, Dioder Trichloracetat, Lactat, Methoxyacetat, Citrat, Succinat, Methansulfonat, Benzolsulfonat, 2- oder 4-Methylbenzolsulfonat oder Naphthalinsulfonat.

Die Herstellung der erfindungsgemäßen Verbindungen kann nach den in der DE 2061964 beschriebenen Verfahren erfolgen. Bevorzugt sind sie herstellbar durch Diazotierung der Verbindung der Formel II 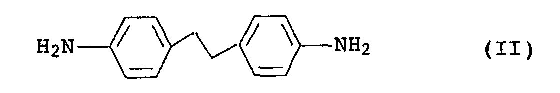 und anschließende Azokupplung mit einer Verbindung der Formel III 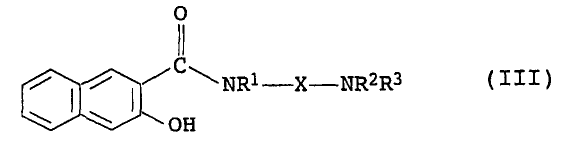 gefolgt von Quarternisierung, oder alternativ durch Quarternisierung der Kupplungskomponente der Formel IV 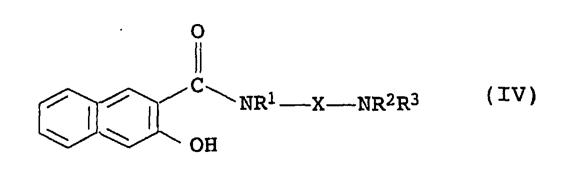 und anschließender Azokupplung in geeigneten Molverhältnissen. Die Reste X, R¹, R² und R³ haben dabei die vorstehend angegebenen Bedeutungen.

Die Quarternisierung erfolgt beispielsweise durch Umsetzung einer Verbindung der Formel IV mit R⁴-A, wobei R⁴ und A die oben angegebenen Bedeutungen besitzen. Beispiele für R⁴-A sind Methyljodid oder Dimethylsulfat.

Diazotierung, Azokupplung, Quaternisierung sowie Kondensation sind an sich bekannte Verfahren und können nach den üblichen Standardmethoden durchgeführt werden.

Die Erfindung betrifft auch Färbemittel, welche die erfindungsgemäßen Verbindungen enthalten. Sie sind im Allgemeinen in einer Menge im Bereich von 0,1 bis 20 Gew.-%, bezogen auf das Gesamtgewicht des Färbemittels, vorhanden.

Die erfindungsgemäßen Bisazoverbindungen können für sich alleine, in Gemischen untereinander oder zusammen mit anderen kationischen oder anionischen Verbindungen in Form einer Lösung oder in Form von Pulvern oder Granulaten verwendet werden, d. h., sie sind sehr gut kombinierbar. Die Verarbeitung z. B. in stabile, flüssige oder feste Färbemittel kann in bekannter Weise erfolgen, z. B. durch Mahlen oder Granulieren oder durch Lösen in geeigneten Lösungsmitteln, gegebenenfalls unter Zugabe von Hilfsmitteln, z. B. eines Stabilisators.

Die Färbemittel liegen bevorzugt in wäßriger Lösung vor. Sie können übliche Hilfsstoffe, wie Netzmittel, Verdickungsmittel, mit Wasser mischbare organische Lösungsmittel etc. enthalten. Bevorzugte Verdickungsmittel sind Polymere, wie Polyacrylsäuren, Polyacrylsäurederivate, Polyvinylamine, Polyvinylamide, Polyvinylacetate, Polyvinylalkohole, Polyvinylpyrrolidone, Polysiloxane oder Copolymere davon. Desgleichen können Oligomere des Ethylenimins, Ethylenoxids oder Propylenoxids oder Derivate dieser Oligomeren zur Anwendung kommen.

Die erfindungsgemäßen Bisazoverbindungen eignen sich zum Färben, Foulardieren und Bedrucken unterschiedlichster Materialien, insbesondere von Papier und Papiermaterialien, Cellulose, Baumwolle, Leder, Bastfasern, Hanf, Flachs, Sisal, Jute, Kokos oder Stroh. Sie sind insbesondere geeignet zum Färben, Foulardieren und Bedrucken von Acrylnitrilpolymerisat- und Acrylnitrilmischpolymerisatfasern, -fäden und daraus hergestellten Textilien, von synthetischen, durch anionische Gruppen modifizierten Amiden und Polyestern, von verschiedensten Mischgeweben, Kunststoff- und Naturharzmassen. Ebenfalls gut geeignet sind sie beispielsweise für Druck- und Anstrichfarben sowie für Inkjet-Tinten.

Die Verbindungen können vorzugsweise als Farbstoffe bei der Herstellung von in der Masse gefärbtem, geleimtem und ungeleimtem Papier verwendet werden. Sie können ebenfalls zum Färben von Papier nach dem Tauchverfahren angewendet werden.

Das Färben, Foulardieren und Bedrucken erfolgt nach an sich bekannten Verfahren.

Die erfindungsgemäßen Bisazoverbindungen zeichnen sich durch leichte Zugänglichkeit und Anwendbarkeit als Farbstoffe für eine breite Vielfalt unterschiedlichster Materialien, sowie durch überlegene Farbstoffeigenschaften aus.

Die neuen Farbstoffe färben das Abwasser bei der Papierherstellung praktisch nicht oder nur wenig an, was für die Reinhaltung der Gewässer besonders vorteilhaft ist. Sie sind hoch substantiv, melieren nicht, wenn sie auf Papier gefärbt sind und sind weitgehend pH-unempfindlich. Insbesondere die Färbungen auf Papier, aber auch auf anderen Materialien zeichnen sich durch eine gute Lichtechtheit aus. Nach langem Belichten ändert sich die Nuance Ton in Ton.

Die gefärbten Papiere, die eine gute Bleichbarkeit aufweisen, sind naßecht, nicht nur gegen Wasser, sondern auch gegen Milch, Seifenwasser, Natriumchloridlösungen, Fruchtsäfte und gesüßte Mineralwasser. Wegen ihrer guten Alkoholechtheit sind sie auch gegen alkoholische Getränke beständig.

Insbesondere bei Papier für Haushaltszwecke und andere Zwecke, bei denen vorhersehbar ist, dass das gefärbte Papier in nassem Zustand mit anderen Gegenständen, z. B. Textilien, in Berührung kommt, ist Beständigkeit gegen Ausbluten äußerst wichtig. Für die Papierindustrie sind Papiere und gefärbter Papierbrei sehr wichtig, die leicht gebleicht werden können, so dass sie wieder verarbeitet oder sofort für andere Papiersorten verwendet werden können. Die erfindungsgemäßen Bisazoverbindungen eignen sich hervorragend für diese Zwecke.

Hervorzuheben sind auch insbesondere ihre gute Migrations-, Hitze-, Licht- und Wetterechtheit, die reinen Farbtöne und die hohe Farbstärke.

Die Erfindung wird in Folgenden anhand von Beispielen, welche die Erfindung in keiner Weise beschränken sollen, näher erläutert.

### Beispiel 1

4,24 g (0,02 mol) 4,4'-Diaminodibenzyl (= 1,2-Di-(4-aminophenyl)ethan) wurden in 100 ml Wasser suspendiert und durch Zugabe von 12 ml konzentrierter Salzsäure in Lösung gebracht. Die Lösung wurde auf 0°C abgekühlt und mit 13,2 ml einer 30%-igen Natriumnitritlösung versetzt. Nach einer Diazotierungszeit von 45 Minuten bei 0 bis 5°C wurde der Nitritüberschuß durch Zugabe von ca. 0,2 g Amidosulfonsäure zersetzt. Die so hergestellte Lösung der Diazokomponente wurde innerhalb von 30 min zu einer auf 0°C gekühlten Suspension von 10,9 g (0,04 mol) 2-Hydroxy-3-(3-(N,N-dimethylamino)propyl)naphthamid in 300 ml Wasser getropft. Man ließ eine Stunde bei 5°C nachrühren. Während dieser Zeit hielt man den pH-Wert mit 20%-iger Natronlauge bei 8 bis 9. Anschließend wurde durch Zugabe von weiterer 20%-iger Natronlauge auf pH 11 eingestellt und der Farbstoff durch Filtration isoliert. Nach Trocknung erhielt man 13,94 g (89,5% der Theorie) eines roten Farbstoffes mit der Formel:

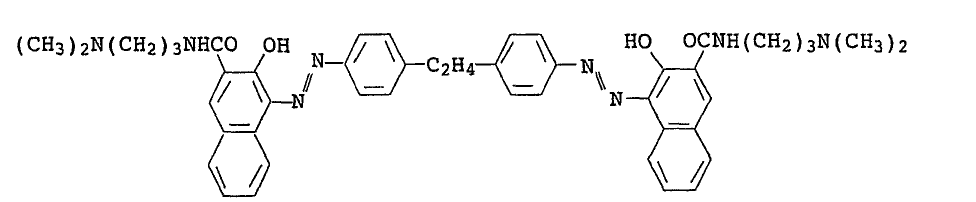

Eine aus Essigester/Ethanol umkristallisierte Probe lieferte folgende spektroskopische Daten:
UV/Vis-Spektrum (Methanol/Essigsäure im Volumenverhältnis 9:1): λₘₐₓ= 536 nm

Analog zu Beispiel 1 wurden folgende Farbstoffe hergestellt

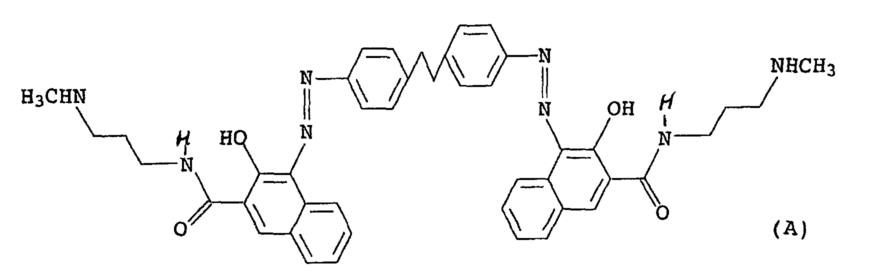

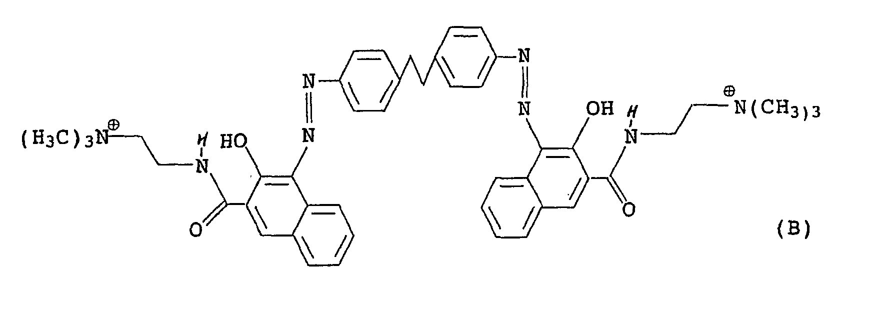

Die Lichtechtheit dieser Verbindungen wurde nach DIN ISO 105 B 02 im Vergleich zu Verbindungen der Formel 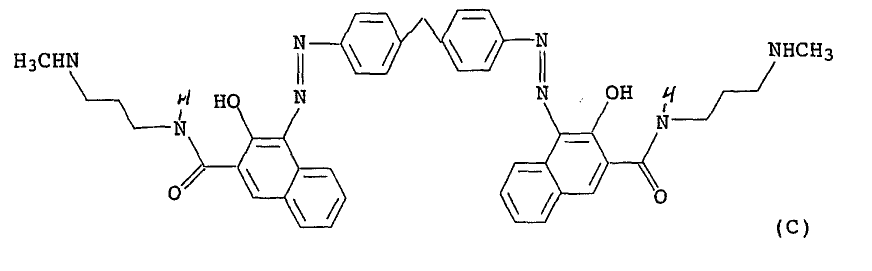 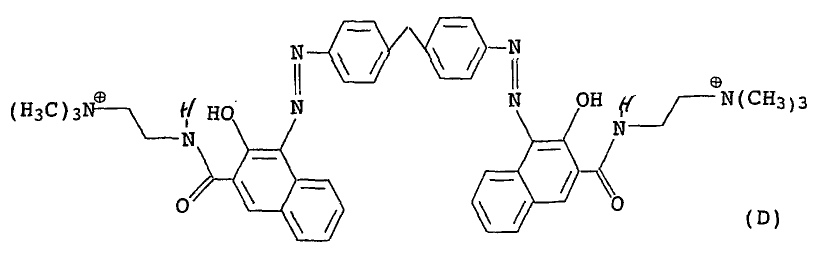 bestimmt. Die Ergebnisse sind in der nachfolgenden Tabelle 1 angegeben.

**Tabelle 1:**

| Verbindung | Lichtechtheit |
|---|---|
| A | 1-2 |
| B | 1-2 |
| C | < 1 |
| D | < 1 |

Es ist ersichtlich, dass die erfindungsgemäßen Verbindungen A und B überraschenderweise erheblich bessere Lichtechtheit aufweisen als die Verbindungen C und D der DE 2061964. Darüberhinaus hat sich gezeigt, dass die Verbindungen A und B im Gegensatz zu den Verbindungen C und D mit Trinkwasser keine Trübung ergeben.

## Patentansprüche

1. Bisazoverbindungen der Formel Ia oder Ib, 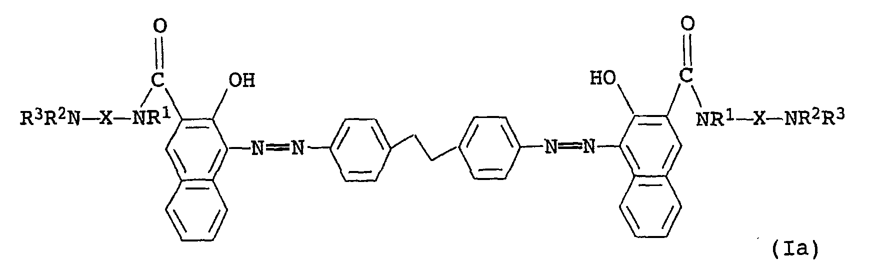 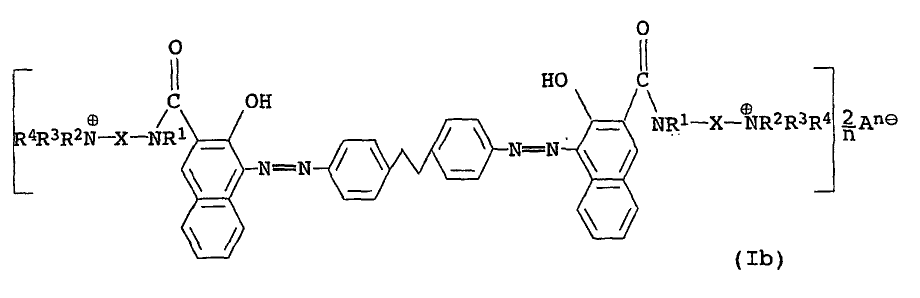 worin
R¹ Wasserstoff oder Methyl ist,
die Gruppen X unabhängig voneinander für -CH₂CH₂- oder -CH₂CH₂CH₂- stehen,
R², R³, R⁴ unabhängig voneinander für Wasserstoff oder Methyl stehen,
A ein Anion ist, und
n der Wertigkeit von A entspricht.

2. Bisazoverbindungen nach Anspruch 1 der folgenden Formeln

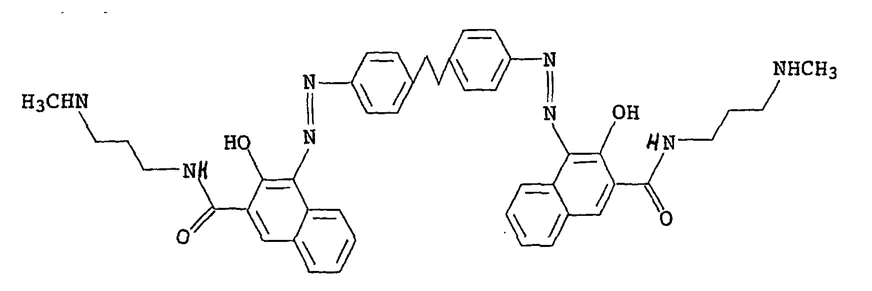

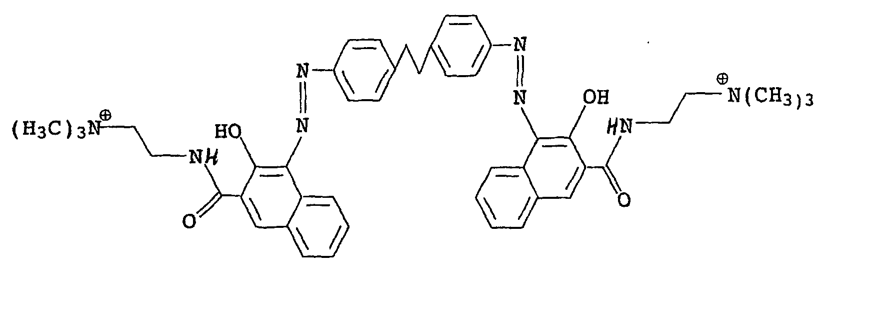

3. Färbemittel, enthaltend mindestens eine Verbindung der Formel I gemäß Anspruch 1 oder 2 und gegebenenfalls weitere kationische oder anionische oder nichtionische Farbstoffe und/oder Hilfsstoffe.

4. Verwendung der Bisazoverbindungen der Formel I gemäß Anspruch 1 oder 2 zum Färben, Foulardieren oder Bedrucken von Papier, Papiermaterialien, Cellulose, Baumwolle, Leder und natürlichen und synthetischen Fasern oder Fasermaterialien.

## Claims

1. Bisazo compounds of the formula Ia or Ib 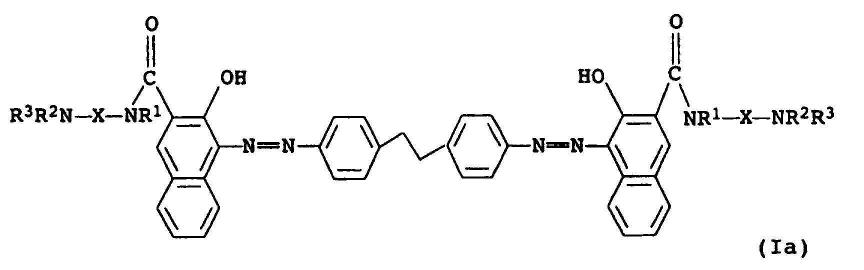 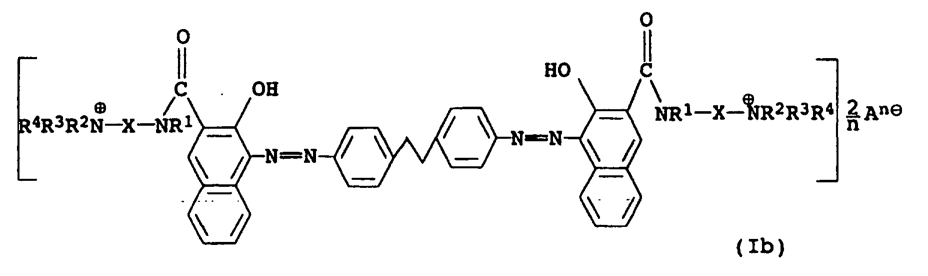 where
R¹ is hydrogen or methyl,
the X groups are independently -CH₂CH₂- or -CH₂CH₂CH₂-,
R², R³, and R⁴ are independently hydrogen or methyl,
A is an anion and
n corresponds to the valency of A.

2. Bisazo compounds as claimed in claim 1, of the following formulae

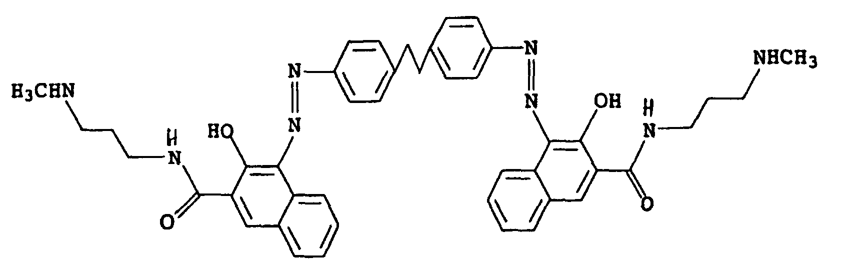

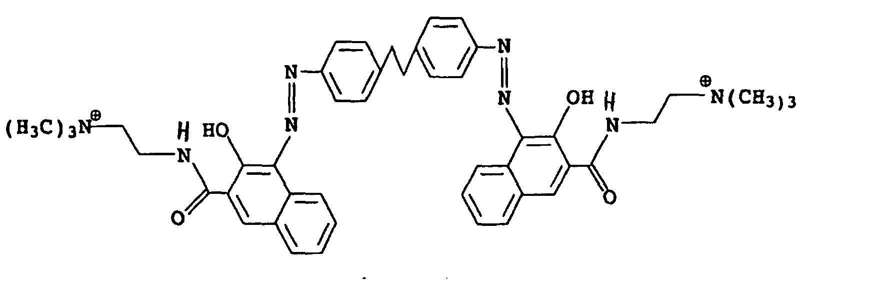

3. A colorant containing at least one compound of the formula I as per claim 1 or 2 and optionally further cationic or anionic or nonionic dyes and/or assistants.

4. The use of the bisazo compounds of the formula I as per claim 1 or 2 for dyeing, padding or printing paper, paper materials, cellulose, cotton, leather and natural and synthetic fibers or fiber materials.

## Revendications

1. Composés bisazoiques de formule Ia ou Ib, 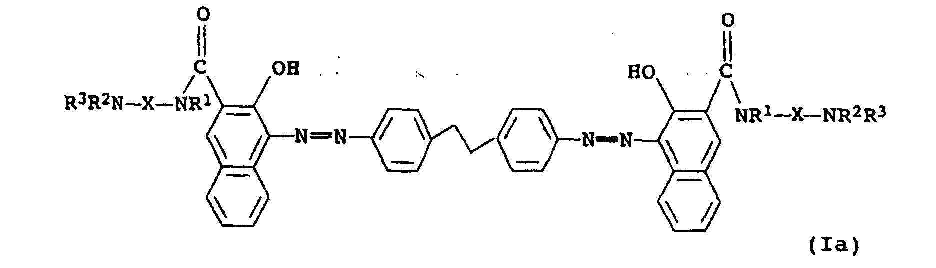 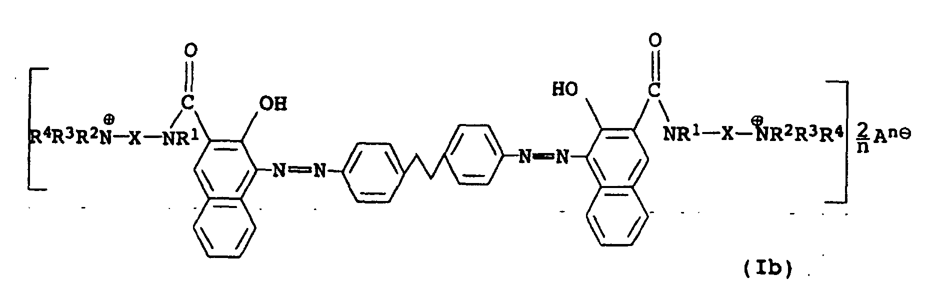 dans lesquelles
R¹ est l'hydrogène ou le méthyle
les groupes X représentent indépendamment les uns des autres -CH₂CH₂- ou CH₂CH₂CH₂-,
R², R³, R⁴ représentent indépendamment les uns des autres l'hydrogène ou le méthyle,
A est un anion, et
n représente la valence de A.

2. Composés bisazoiques selon la revendication 1 des formules suivantes :

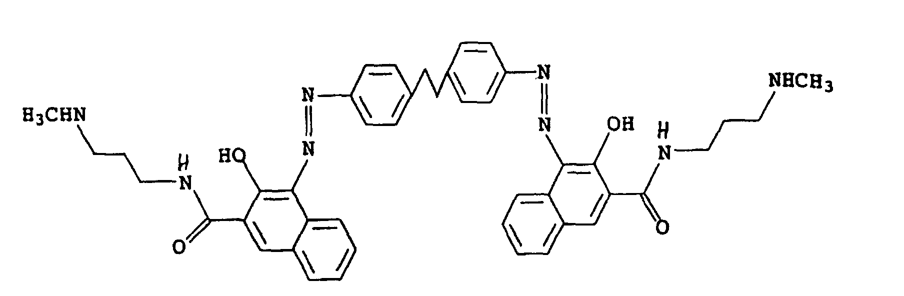

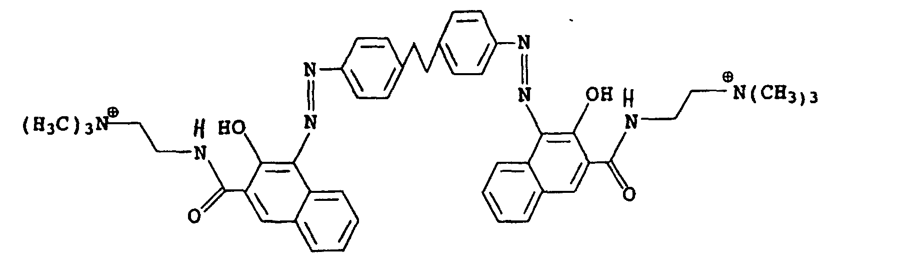

3. Colorants contenant au moins un composé de formule I selon la revendication 1 ou 2 et le cas échéant des colorants et/ou des auxiliaires cationiques ou anioniques ou non-ioniques.

4. Utilisation des composés bisazoiques de formule I selon la revendication 1 ou 2 pour la coloration, le foulardage ou l'impression de papier, de matériaux en papier, de cellulose, de coton, de cuir et de fibres ou de matériaux fibreux naturels ou synthétiques.
